# EUROPEAN PATENT APPLICATION

(11) **EP 1 422 937 A2**
(43) Date of publication of application: **26.05.2004**
(21) Application number: 03022166.7
(22) Date of filing: 30.09.2003
(51) Int. Cl.: H04N 5/445

(54) **Data broadcast receiving apparatus, code signal output device, and broadcast receiving apparatus control method**

(30) Priority: 20.11.2002 JP 2002337066
(71) Applicant: Kabushiki Kaisha Toshiba, Tokyo (JP)
(72) Inventor: Miyazaki, Satoshi, Int. Property Division, Minato-ku Tokyo 105-8001 (JP)
(74) Representative: Henkel, Feiler & Hänzel

(57) **Abstract**

A broadcast receiving apparatus which has a function controlled by a received code signal has a code signal output device (R) which detects its own motion, and outputs a control signal which responds to the detected motion as a code signal, a code signal function setting portion (24) which sets a function for controlling the broadcast receiving apparatus in response to the code signal, and a control portion (19) which receives the code signal according to the motion of the code signal output device, the signal being outputted from the code signal output device, and carries out control based on the function set at the code signal function setting portion in response to the reception. In this manner, an operation of the broadcast receiving apparatus can be carried out smoothly and intuitively by moving the remote control main body.

## Description

The present invention relates to a broadcast receiving apparatus using a remote controller device (a code signal output device). More particularly, the present invention relates to a broadcast receiving apparatus, a code signal output device, and a broadcast receiving apparatus control method for detecting a motion of a remote controller device itself as an operating signal.

Recently, EPG (Electronic Program Guide) information for displaying information associated with programs for television broadcasting on a screen is practically used in a digital broadcasting receiving apparatus or television apparatus and the like.

In a conventional analog transmission system such as terrestrial wave broadcasting, there is used a method for transmitting this EPG information superimposed on a VBI (Vertical Blanking Interval) of a video image signal. In addition, in a digital transmission system such as digital satellite broadcasting, the EPG information is digitally transmitted as a data packet. In any case, the EPG information is encoded at the broadcast receiving apparatus side, and a program table or program associated information is displayed on a screen. Such EPG information is targeted for operation of the broadcast receiving apparatus. For example, it is desirable that the EPG information can be browsed by universally operating it by a remote controller device.

As the prior art (Jpn. Pat. Appln. KOKAI Publication No. 09-289595) using the remote controller device associated therewith, there is known a television apparatus or the like having a function for moving a cursor in accordance with an angle of the remote controller, specifying the cursor, and inputting a character.

However, in this technique, character input is carried out without using a keyboard by moving the cursor in accordance with the angle of the remote controller and specifying a character. Delicate operation using angle control of the remote controller is required, and thus, operation of the broadcast receiving apparatus such as browsing of the above described EPG information which the present invention intents to do cannot be carried out smoothly.

That is, in the case where an attempt is made to change a date while the EPG is displayed, there has been conventionally used a method for allocating an arbitrary key of the remote controller main'body to the previous day or next day, and pressing the key until the allocated date has been changed to a target date, or alternatively, a system of displaying a date specification jump menu as a convenient function, and selecting a user desired date. In the former method, in the case where an attempt is made to refer to a program table of five days before, for example, the key must be pressed five times, and it is difficult to intuitively identify which key to press. In the latter case, there is a problem that a large amount of time is required for creating a convenient function menu, and complicated operation is required for the user.

It is an embodiment of the present invention to provide a broadcast receiving apparatus and a code signal output device capable of smoothly carrying out an operation such as an EPG date and time change, for example by vertically or horizontally swinging a remote controller main body.

In order to solve the above described problems, according to the present invention, there is provided a broadcast receiving apparatus which has a function controlled by a received code signal, comprises a code signal output device which detects its own motion, and outputs a control signal which responds to the detected motion as a code signal; a code signal function setting portion which sets a function for controlling the broadcast receiving apparatus in response to the code signal; and a control portion which receives the code signal according to the motion of the code signal output device, the signal being outputted from the code signal output device, and carrying out control based on the function set at the code signal function setting portion in response to the reception.

In addition, according to the present invention, there is provided a code signal output device comprises a detecting portion which detects its own motion to output a motion signal; a code signal converting portion which converts the motion signal outputted by the motion detecting portion into a code signal; and a code signal output device for externally outputting the code signal converted by the code signal converting portion.

According to the present invention, with the above described configuration, a user moves a remote controller device (a code signal output device) main body which is a code signal output device in an upward direction or a downward direction (or in a horizontal direction) or the like, thereby detecting a code signal by a gyro sensor or the like incorporated in the remote controller device. Then, the detected signal is outputted to be encoded to a code signal, whereby the broadcast receiving apparatus receives the outputted signal as an operating signal. Then, a user set function, for example, date change or time change of EPG information (electronic program information) can be carried out by smooth and intuitive operation.

In addition, discrimination such as high speed or low speed is allocated to this motion detection, whereby, for example, if a fast motion in a downward direction is detected, the date of EPG information can be advanced, or alternatively, if a fast motion in an upward direction is detected, the date can be returned to its original date. In addition, if a slow motion is detected, the motion is set to a predetermined time, and the time is changed according to the direction, thereby enabling intuitive EPG information change.

Furthermore, without being limited to change of EPG information, it becomes possible to allocate an arbitrary operation such as channel or volume control according to the motion in the vertical (or horizontal) direction according to the user settings. Moreover, a display of a light emitting diode of the remote controller main body or an icon display on a screen connected to the broadcast receiving apparatus is provided, thereby making it possible for the user to carry out intuitive and smooth operation by swinging the remote controller main body.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram depicting an exemplary configuration of a digital broadcast receiving apparatus according to the present invention;
FIG. 2 is a block diagram depicting an exemplary configuration of a digital television according to the present invention;
FIG. 3 is a block diagram depicting an exemplary configuration of an analog broadcast receiving apparatus according to the present invention;
FIG. 4 is a schematic view showing an exemplary configuration of a remote controller device according to the present invention;
FIG. 5 is a block diagram depicting an exemplary configuration of the remote controller device according to the present invention;
FIG. 6 is a flow chart illustrating a first embodiment based on a code signal according to the present invention;
FIG. 7 is a flow chart illustrating a second embodiment based on a code signal according to the present invention;
FIG. 8 is a view showing a screen for functional allocation to a code signal in a vertical direction according to the present invention;
FIG. 9 is a view showing a screen for functional allocation to a code signal in a horizontal direction according to the present invention;
FIG. 10 is a view showing a time change on an EPG screen using a code signal according to the present invention; and
FIG. 11 is a view showing a channel change on a television screen using the code signal according to the present invention.

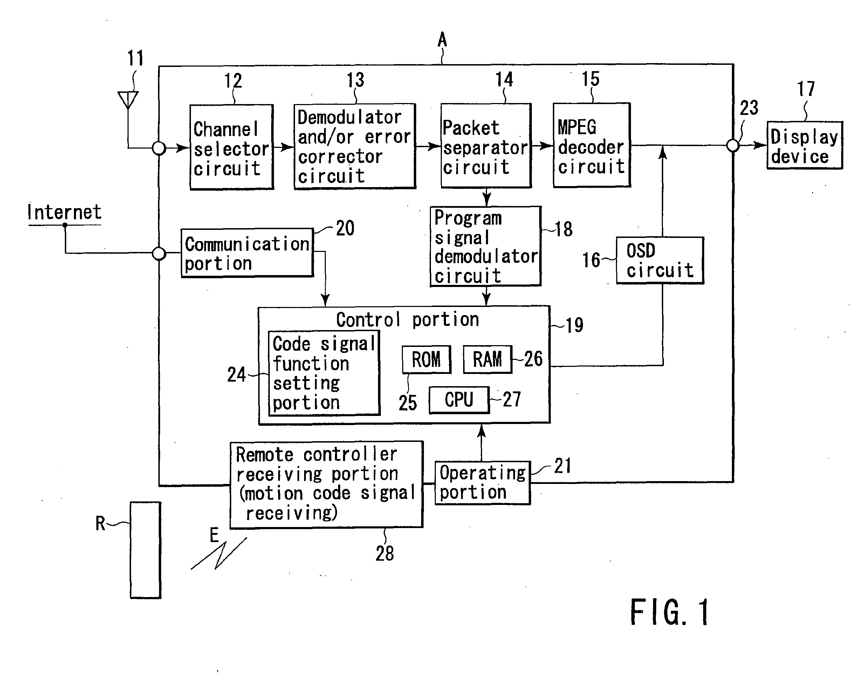

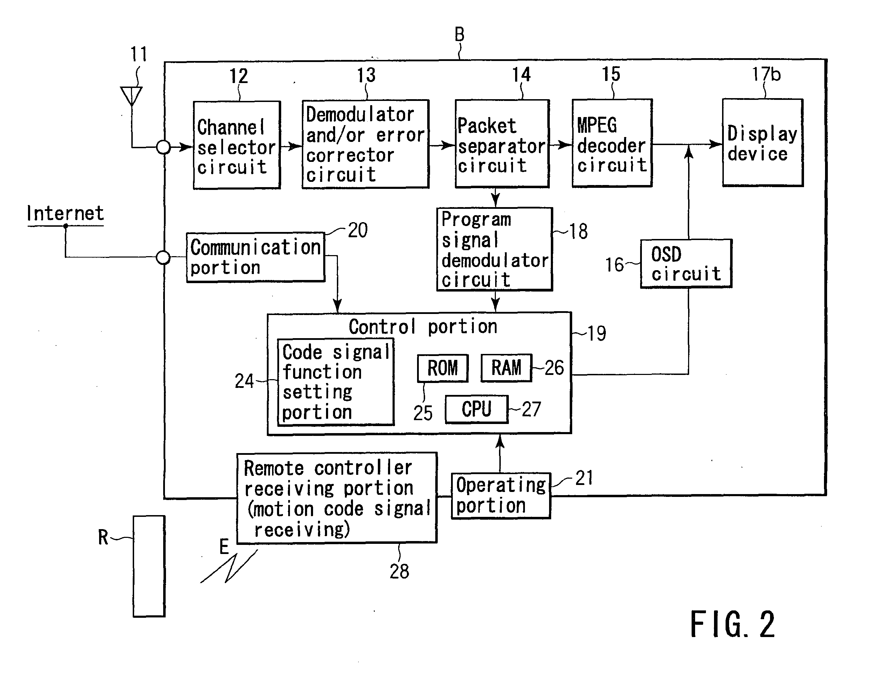

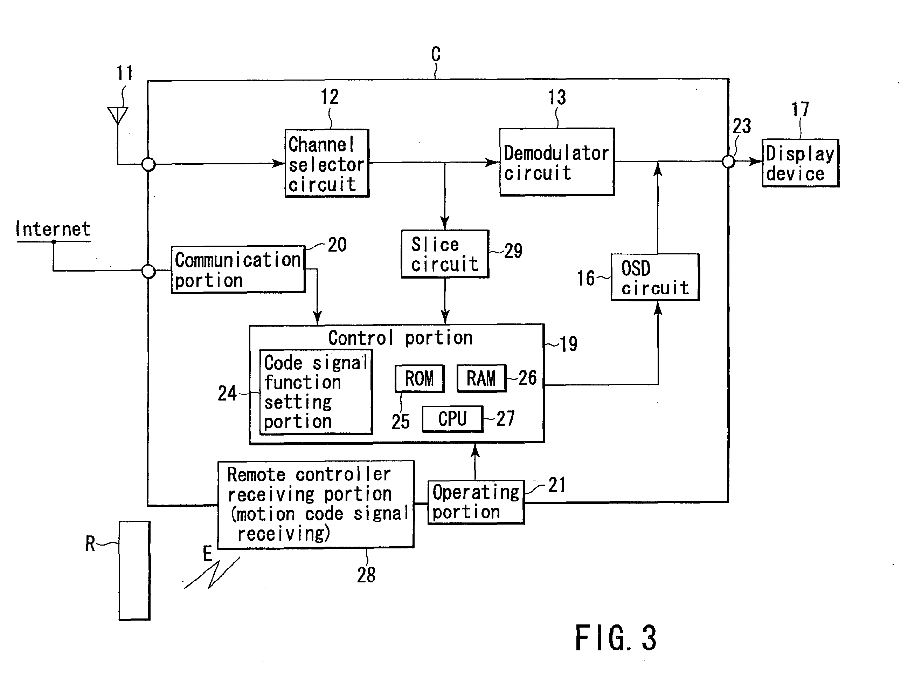

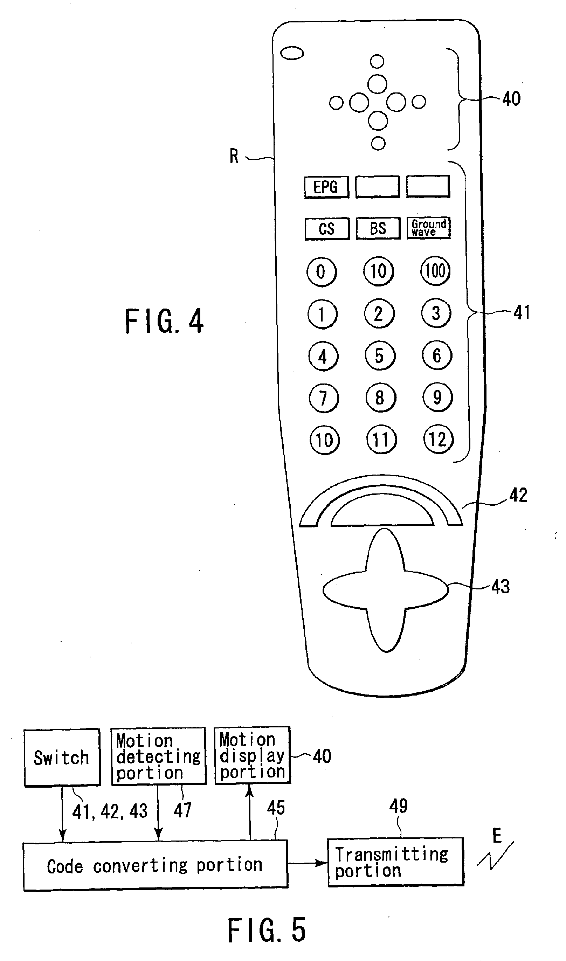

Hereinafter, an embodiment of a broadcast receiving apparatus and a remote controller device according to the present invention will be described in detail with reference to the accompanying drawings. FIG. 1 is a block diagram depicting an exemplary configuration of a digital broadcast receiving apparatus according to the present invention. FIG. 2 is a block diagram depicting an exemplary configuration of a digital television according to the present invention. FIG. 3 is a block diagram depicting an exemplary configuration of an analog broadcast receiving apparatus according to the present invention. FIG. 4 is a schematic view showing an exemplary configuration of a remote controller device according to the present invention. FIG. 5 is a block diagram depicting its configuration.

### <Broadcast receiving apparatus and remote controller device>

A broadcast receiving apparatus "A" according to the present invention is a digital broadcast receiving apparatus which receives a digital broadcast as an example, as shown in FIG. 1. This apparatus has: a channel selector circuit 12 to which a satellite antenna 11; a demodulator and/or error corrector circuit 13 which receives an output of a channel selected digital broadcast signal; and a packet separator circuit 14 which receives an output signal to which a demodulation process and an error correction process have been applied. Further, the apparatus has an MPEG2 decoder circuit 15 to which a packet of a desired program separated by this packet separator circuit 14 is supplied. This output is provided to an output terminal 23. The output terminal is connected to a display device 17 such as an external display.

Further, the digital broadcast receiving apparatus A has a program signal demodulator circuit 18 to which EPG information including program information is supplied from the packet separator circuit 14; and a control portion 19 to which this demodulated output is supplied. Further, this apparatus has a communication portion 20 connected to an external Internet, the communication portion making communication so as to acquire EPG information, for example. The communication portion 20 may be a wired LAN (Local Area Network) or a wireless LAN. This communication portion can be a modem connected to a telephone line. The control portion 19 is connected to an operating portion 21 and a remote controller receiving portion 28, and an operating signal is supplied. The remote controller receiving portion 28 receives an operating signal E from a remote controller device R described later. The control portion 19 further has a ROM 25 or RAM 26, a CPU 27 or the like, and a code signal function setting portion 24 at its inside. This control portion is connected to units of the above described portions each, and governs a whole operation. Further, an OSD (On Screen Display) circuit 16 which is a display signal generating portion is connected to this control portion, and this output is superimposed on an output of an MPEG decoder circuit 15. The OSD circuit 16 generates EPG information from the control portion 19 or an icon display signal and the like for displaying operational information using a code signal E described later.

Furthermore, a digital television apparatus B according to the present invention has a structure which is substantially identical to the broadcast receiving apparatus A shown in FIG. 2, and further, a display portion 17b is incorporated.

Furthermore, the present invention can be applied to an analog broadcast receiving apparatus C as well as the above described digital broadcast receiving apparatus. The analog broadcast receiving apparatus according to the present invention, as shown in FIG. 3, has: a channel selector circuit 12 to which an antenna 11 is connected; a demodulator circuit 13 for receiving an output of the channel selected analog broadcast signal; and a slice circuit 29 for detecting EPG information superimposed on a VBI (Vertical Blanking Interval) of the analog broadcast signal. In addition, this receiving apparatus has another configuration common to the broadcast receiving apparatus A shown in FIG. 1.

Furthermore, a remote controller device R (code signal output device) according to the present invention, as shown in FIG. 4, has: a motion display portion 40 using a light emitting diode for displaying the detected motion signal of the remote controller main body R; a switch for specifying EPG information; a mode switch or channel switch 41 and the like for specifying a CS channel or a BS channel; and operating keys 42 and 43. Moreover, the remote controller device R, as shown in FIG. 5, has: switches 41, 42, and 43; a motion detecting portion 47 which is a gyro sensor (or possibly another speed sensor), for example, for detecting a motion in a vertical direction or a horizontal direction of the remote controller main body R; a motion display portion 49 using the above described light emitting diode or the like; and a code converting portion 45 connected to these portions. Further, the remote controller device R has a transmitting portion 49 for transmitting to the broadcast receiving apparatus A or the like an operating code and a code signal E from the code converting portion 45.

The digital broadcasting receiving apparatus A and television apparatus B according to the present invention having such a configuration carries out a receiving process, as shown below. That is, frequency converted digital television broadcast data received by the satellite antenna 11 is channel-selected by the channel selector circuit 12, and a demodulation process and an error correction process are applied at the demodulator and/or error corrector circuit 13.

The packet separator circuit 14 applies a packet separation process to an inputted transport stream, outputs a packet of a desired program to the MPEG2 decoder circuit 15, and outputs EPG information including program information to a program signal demodulator circuit 18. The MPEG2 decoder circuit 15 decodes a video image and voice of the selected packet.

On the other hand, a program signal demodulator circuit 18 demodulates inputted EPG information and outputs EPG information. Furthermore, it is possible to acquire EPG information from Internet via the communication portion 20. One or both of these EPG information acquisition methods is or are carried out according to their settings. The demodulated EPG information or the EPG information acquired via Internet is supplied to the control portion 19, and is processed there. Then, the control portion 19 generates a desired program information display signal from EPG information based on a command from the operating portion 21, and outputs the signal to the OSD (On Screen Display) circuit 16 which is a display signal generating portion. The OSD circuit 16 composites the program information display signal with a decoded video image signal, and outputs the composite signal to an output terminal 23.

In the broadcast receiving apparatus C as well, although the packet separator circuit 14 or MPEG decoder circuit 14 is not provided, the video image signal obtained when EPG information is selectively added to video image information by means of the OSD circuit 16 is outputted via a motion of the control portion 24 by means of the output terminal 23.

### <Processing operation of broadcast receiving apparatus and remote controller device>

A characterizing processing operation using a code signal of the present invention in the broadcast receiving apparatus and remote controller device having the above described configuration will be described below in detail with reference to flow charts.

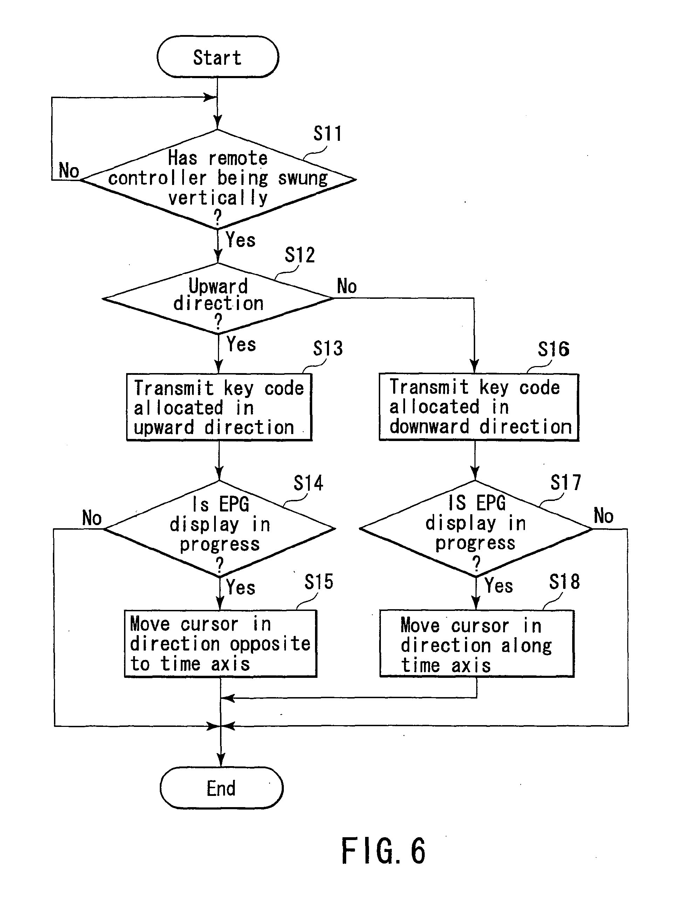

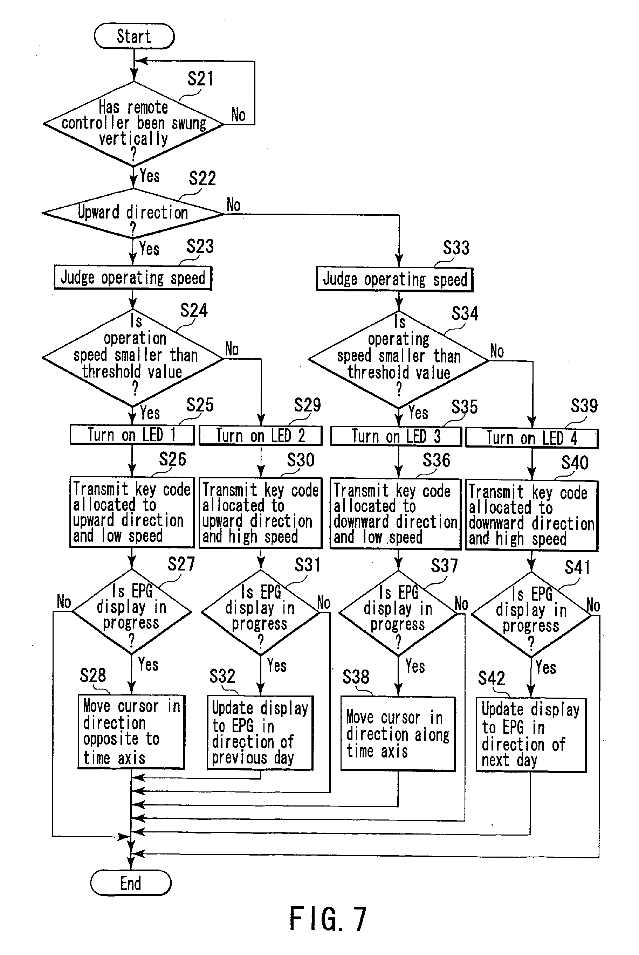

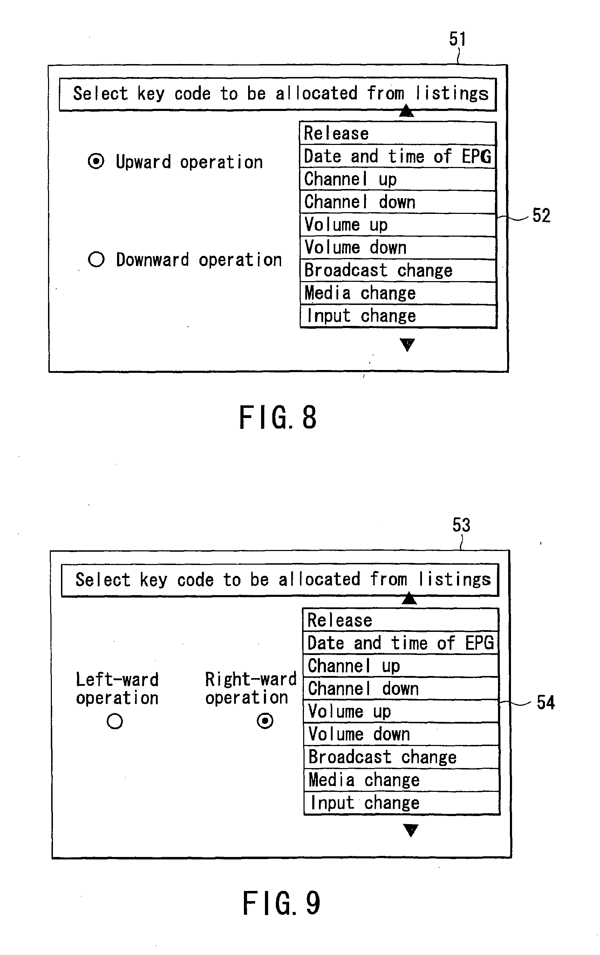

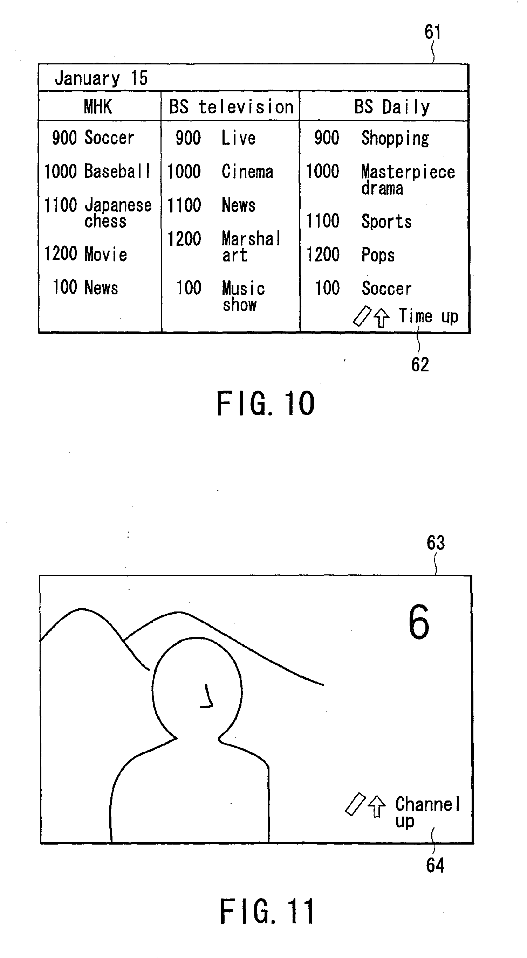

FIG. 6 is a flow chart illustrating a first embodiment based on a code signal according to the present invention. FIG. 7 is a flow chart illustrating a second embodiment. FIG. 8 is a view showing a screen for functional allocation to a code signal in a vertical direction according to the present invention. FIG. 9 is a view showing a screen for functional allocation to a code signal in a horizontal direction. FIG. 10 is a view showing a time change on an EPG screen using a code signal. FIG. 11 is a view showing a channel change on a television screen using a code signal.

### (First embodiment)

In the broadcast receiving apparatus and remote controller device according to the present invention, a user swings the remote controller main body R in an upward direction or a downward direction, or alternatively, in a right direction or in a left direction, for example, thereby detecting the resultant motion and transmitting a converted code signal. At the broadcast receiving apparatus A side, control is provided according to the pre-allocated function, thereby making it possible to carry out intuitive and smooth operation over the prior art.

In motion detection, for example, it is preferred to detect the upward direction and downward direction. In the flow chart of FIG. 6, a description of this operation will be given below. In FIG. 6, the user swings the remote controller main body R in the upward direction or the downward direction, whereby a code converting portion 45 having received a motion direction signal and motion speed signal, for example, outputted from a motion detecting portion 47 such as a gyro sensor shown in FIG. 5 detects that the remote controller has been swung vertically (S11). When the controller is swung in the upward direction (S12), a detection signal between the direction signal and the motion signal is converted into a code signal allocated in the upward direction, and the converted signal is supplied to a transmitting portion 49. The transmitting portion 49 transmits this code signal E to a remote controller receiving portion 28 of the broadcast receiving apparatus A, for example (S13).

At the broadcast receiving apparatus A, the remote controller receiving portion 28 receives this code signal E in the same manner as in another operating signal, and supplies the code signal to the control portion 19 via the operating portion 21. Here, the control portion 19 executes the allocated motion in the upward direction, for example, according to the function set to be associated with the motion code in advance by the code signal function setting portion 24.

Now, functional settings using the code signal function setting portion 24 will be described with reference to FIG. 8. In FIG. 8, with respect to the vertical direction, for example, the user calls a setting screen 51 from a menu, and allocates the direction according to the setting screen. That is, on the setting screen 51 shown in FIG. 8, an upward operation is selected, and the corresponding function is specified by selecting it as "EPG date and time", for example, using the cursor or the like. The "release" used here denotes a state in which nothing is assigned to this code signal. The "EPG date and time" used here denotes that a code signal is handled as an operating signal for changing date or time of EPG information. Similarly, the "channel up and/or channel down" used here denotes change of one of the BS broadcast or CS broadcast and terrestrial wave channels which the channel selector circuit 12 selects. The "volume up and/or volume down" used here denotes volume increase or decrease of the broadcast receiving apparatus A or the like. The "broadcast change" used here denotes change of the CS broadcast, BS broadcast, and terrestrial wave channels. The "media change" used here denotes change of TV, radio, and data broadcast in the CS broadcast and BS broadcast or the like. The "input change" used here denotes, for example, change of an input source of the broadcast receiving apparatus. For example, it denotes change of video 1, video 2, and "i" link or the like.

In the case where the function thus allocated by the code signal function setting portion 24 has been EPG date and time, the control portion 19 asks whether EPG information is currently displayed or not (S14). When the EPG information is currently displayed, the displayed information is moved in a direction opposite to a time axis (S15). Then, the moved information is superimposed by means of the OSD circuit 18, and the superimposed information is outputted to the output terminal 23 together with a video image signal.

Furthermore, if the code converting portion 45 judges that the remote controller has been swung in the downward direction similarly, the motion is converted into the code signal E allocated in the downward direction similarly, and the converted signal is supplied to the transmitting portion 49. The transmitting portion 49 transmits this code signal E to the remote controller receiving portion 28 of the broadcast receiving apparatus A, for example (S16).

In the broadcast receiving apparatus A, the remote controller receiving portion 28 receives this code signal E in the same manner as in another operating signal, and supplies the code signal to the control portion 19 via the operating portion 21. Here, the code signal function setting portion 24 changes EPG information allocated in the downward direction, for example, according to the function set in advance to be associated with the motion code. That is, when the EPG information is displayed (S17), the displayed information is moved by the cursor in a direction along the time axis (S18). Then, the moved information is superimposed by means of the OSD circuit 18, and the superimposed information is outputted to the output terminal together with the video image signal.

As has been described above, in the remote controller device and broadcast receiving apparatus according to the present invention, unlike the conventional apparatus, the remote controller main body R is swung in the upward direction or downward instead of carrying out an EPG date and time change operation, for example, by a dedicated key operation or a complicated operation on a predetermined operating screen, thereby making it possible to carry out EPG date and time change intuitively and smoothly, for example.

### (Second embodiment)

In the above described remote controller device and broadcast receiving apparatus according to the present invention, various modifications can occur. Such various modifications will be described below in detail with reference to the accompanying drawings. That is, in the remote controller device and broadcast receiving apparatus according to the present invention, as shown in the flow chart of FIG. 7, the motion speed of the remote controller main body R is identified by at least one or more threshold values, thereby making it possible to allocate different functions, respectively. Furthermore, when the motion of the remote controller main body is detected, the detected motion is displayed by a light emitting diode or the like, thereby making it possible to reliably indicate the user that the motion has been detected. Furthermore, it is possible to detect and apply a motion in a variety of directions such as a horizontal direction as well as a vertical direction.

In the flow chart of FIG. 7, the user swings the remote controller main body R in the upward direction or downward direction, whereby the code converting portion 45 having receives a motion direction signal and a motion speed signal, for example, outputted from the motion detecting portion 47 such as a gyro sensor shown in FIG. 5 detects that the remote controller has been swung vertically (S21). When the remote controller has been swung in the upward direction (S22), the code converting portion judges an operating speed by comparing the motion speed signal with the threshold value (S23, S24). If the judgment result is "upward direction and low speed" which is smaller than the threshold value according to the direction and scale, for example, only a light emitting diode indicating "upward and large" at a display portion 40 of the remote controller R in FIG. 4 is emitted (S25). Then, the current code is converted into a code signal allocated to the upward direction and low speed, and the converted code signal is supplied to the transmitting portion 49 for the purpose of transmission.

If the judgment result is "upward direction and high speed" which is the threshold value, both of the light emitting diodes indicating "upward and large" and "upward and small" at the display portion 40 of the remote controller R in FIG. 4 are emitted (S29). Then, the current code is converted into a code signal allocated to the upward direction and high speed, and the converted code signal is supplied to the transmitting portion 49 for the purpose of transmission.

Furthermore, when the judgment result is "downward direction" (S22), the motion signal is compared with a threshold value, and an operating speed is judged (S33, S34). Then, when the judgment result is "downward direction and low speed" which is smaller than the threshold value according to the direction and scale, for example, only a light emitting diode indicating "downward and large" at the display portion 40 of the remote controller R in FIG. 4 is emitted (S35). Then, the current code is converted into a code signal allocated to the downward direction and low speed, and the converted code signal is supplied to the transmitting portion 40 for the purpose of transmission.

When the judgment result is "downward direction and high speed" which is greater than the threshold value, for example, both of light emitting diodes indicating "downward and large" and "downward and small" at the display portion 40 of the remote controller R in FIG. 4 are emitted (S39). Then, the current code is converted into a code signal allocated to the downward direction and high speed, and the converted code signal is supplied to the transmitting portion 49 for the purpose of transmission.

On the other hand, at the broadcast receiving apparatus A, the remote controller receiving portion 28 receives a code signal E transmitted from the remote controller device R in the same manner as in another operating signal, and supplies the code signal to the control portion 19 via the operating portion 21. Here, the control portion 19 executes processing according to the function set in advance to be associated with the motion code by the code signal function setting portion 24.

That is, in the case where the function allocated to "upward direction and high speed" by the code signal function setting portion 24 has been EPG date and time, the control portion 19 asks whether EPG information is currently displayed (S27). When the EPG information is displayed, the displayed information is moved to a direction opposite to the time axis, for example (S28). Then, the moved information is superimposed by means of the OSD circuit 18, and the superimposed information is outputted to the output terminal 23 together with the video image signal.

Further, in the case where the function allocated to "upward direction and high speed" by the code signal function setting portion 24 has been EPG date and time, the control portion 19 asks whether EPG information is currently displayed or not (S31). When the EPG information is displayed, the displayed information is updated to the EPG in the direction of the previous day (S32). Then, the updated information is superimposed by means of the OSD circuit 18, and the superimposed information is outputted to the output terminal 23 together with the video image signal.

Similarly, in the case where the function allocated to "downward direction and low speed" by the code signal function setting portion 24 has been EPG date and time, the control portion 19 asks whether EPG information is current displayed or not (S37). When the EPG information is displayed, the displayed information is moved to a direction along the time axis, for example (S38). Then, the moved information is superimposed by means of the OSD circuit 18, and the superimposed information is outputted to the output terminal 23 together with the video image signal.

Further, in the case where the function allocated to "downward direction and high speed" by the code signal function setting portion 24 has been EPG date and time, the control portion 19 asks whether EPG information is currently displayed or not. When the EPG information is displayed, the displayed information is updated to the EPG in the direction of the next day (S42). Then, the updated information is superimposed by means of the OSD circuit 18, and the superimposed information is outputted to the output terminal 23 together with the video image signal.

If the code signal function setting portion 24 sets a function other than EPG information display, a control operation is provided in accordance with the function set to a respective one of the code signals. At the code signal function setting portion 24, the code signal is determined depending on a speed difference such as high speed or low speed as well as the motion direction. More detailed settings can be provided by allocating a proper function which is different depending on a great change at a high speed or a small change at a low speed.

As has been described above, in the remote controller device and broadcast receiving apparatus according to the second embodiment as well, it becomes possible to carry out intuitive and smooth operation over the conventional apparatus.

Furthermore, as shown in the setting screen of FIG. 9. with respect to motion detection of the remote controller device R, it is preferred that a motion in a horizontal direction (not limited thereto) as well as the vertical direction be detected, and a function be allocated to the thus detected motion. That is, on the setting screen 53 shown in FIG. 9, it becomes possible to allocate a function based on a selection 54 to each of the left and right movements. In this manner, more functions can be operated easily and intuitively.

At this time, at the display portion 40 of the remote controller device R, similarly, the corresponding light emitting diode is emitted with respect to the right and left directions, thereby making it possible to provide displays such as "right direction and high speed", "right direction and low speed", "left direction and high speed" and "left direction and low speed". In this manner, it becomes possible for the user to clearly identify the motion in a predetermined direction of the remote controller device R which seems comparatively difficult to identify.

Similarly, in the display screens 17, 17b of the broadcast receiving apparatus A or C and television apparatus B, according to another embodiment in which it is clearly identified that a code signal has been provided, it is preferred that an icon display be provided based on the fact that the code signal has been detected, as in a screen 61 shown in FIG. 10 or a screen 63 shown in FIG. 11. That is, in the screen 61 shown in FIG. 10, movement of the EPG information in a direction opposite to the time axis allocated based on the code signal due to the swing in the upward direction of the remote controller device R is carried out. In addition, the icon display of a "time up" 62 is provided by means of the OSD circuit 16 which is a display signal generating portion, by the display signal being superimposed on the video image signal.

Similarly, in the screen 63 shown in FIG. 11, a change in the channel upward direction allocated based on the code signal due to the swing in the upward direction of the remote controller device R is made, and the display signal is superimposed on the video image signal by means of the OSD circuit 16, whereby the icon display of a "channel up" 64 is displayed.

In this manner, the user swings the remote controller, whereby its motion is detected, making it possible to intuitively recognize on a screen that the detected motion has been reflected as an operation.

In addition, it is preferred that the code signals of the remote controller device and broadcast receiving apparatus according to the present invention be applied to page change of a program description screen or the like or a scroll screen for program check or the like as well as moving the EPG screen.

According to a variety of the above described embodiments, one skilled in the art can achieve the present invention. Further, various modifications of these embodiments can be readily conceived by one skilled in the art, and can be applied to a variety of embodiments even if one skilled in the art does not have inventive ability. Therefore, the present invention covers a broad range which is not contradictory to the disclosed principle and novel features, and is not limited to the above described embodiments.

As has been described above in detail, according to the present invention, there is provided a broadcast receiving apparatus, a code signal output device, and a broadcast receiving apparatus control method capable of intuitively and easily carrying out an operation for changing an EPG information screen or the like, for example, by swinging the remote controller main body in a vertical direction or the like.

In addition, there is provided a broadcast receiving apparatus, a code signal output device, and a broadcast receiving apparatus control method capable of intuitive operation for freely setting an operation according to a swing speed according to the user settings, whereby a great change is made in the case of a great swing, and a small change is made in the case of a small swing.

## Claims

1. A broadcast receiving apparatus which has a function controlled by a received code signal, **characterized by** comprising:
a code signal output device (R) which detects its own motion, and outputs a control signal which responds to the detected motion as a code signal;
a code signal function setting portion (24) which sets a function for controlling the broadcast receiving apparatus in response to the code signal; and
a control portion (19) which receives the code signal according to the motion of the code signal output device, the signal being outputted from the code signal output device, and carries out control based on the function set at the code signal function setting portion in response to the reception.

2. A broadcast receiving apparatus according to claim 1, **characterized by** further comprising a program information acquiring portion (21) which externally acquires program information according to a date and a time, wherein the control portion having received the code signal provides control so as to change a date and a time of the program information outputted by the program information acquiring portion by setting the code signal function setting portion.

3. A broadcast receiving apparatus according to claim 2, **characterized in that**, when the control portion has received a code signal corresponding to a motion equal to or greater than a threshold value of a main body of the code signal output device from the program information acquiring portion, the control portion changes a date of the program information, and when the control portion has received the code signal corresponding to the motion equal to or greater than the speed of the threshold value, the control portion changes a time of the program information.

4. A broadcast receiving apparatus according to claim 2, **characterized in that** the control portion having received the code signal provides control so as to change at least one of the date and time of the program information contained in the program signal demodulator circuit, a channel of the broadcast signal, a volume of a voice signal of the broadcast signal, a broadcast type of the broadcast signal, a media type of the broadcast signal, and an input source outputted by the broadcast receiving apparatus according to setting of the code signal function setting portion.

5. A broadcast receiving apparatus according to claim 1, **characterized in that** the control portion receives the code signal corresponding a motion in a vertical direction of a main body of the code signal output device.

6. A broadcast receiving apparatus according to claim 1, **characterized in that** the control portion receives the code signal corresponding to motions in the vertical direction and horizontal direction of the main body of the code signal output device.

7. A broadcast receiving apparatus according to claim 1, **characterized in that** the control portion receives the code signal corresponding to a motion equal to or greater than a threshold speed of the main body of the code signal output device and a motion equal to or smaller than the threshold speed thereof, respectively.

8. A broadcast receiving apparatus according to claim 1, **characterized by** further comprising: a display signal generating portion which generates and outputs a display signal for displaying the control content of the control portion on a screen when the control portion receives the code signal.

9. A broadcast receiving apparatus according to claim 1, **characterized in that** the code signal output device comprises the following:
a motion detecting portion (47) which detects its own motion and outputs a motion signal;
a code signal converting portion (45) which converts the motion signal outputted by the motion detecting portion into a code signal; and
a code signal output portion (49) which externally outputs the code signal converted by the code signal converting portion.

10. A broadcast receiving apparatus according to claim 9, **characterized by** further comprising: a display portion (40) which, when the motion detecting portion detects a motion of the code signal output device itself and outputs a motion signal, displays this motion.

11. A broadcast receiving apparatus according to claim 9, **characterized by** further comprising: a gyro sensor (47) which, when the motion detecting portion detects a motion direction and a motion speed of the code signal output device itself, outputs the motion signal.

12. A control method for controlling an operation of a broadcast receiving apparatus by a received code signal, the control method **characterized by** comprising:
detecting (S11, S12, S13, S16, S26, S30, S36, S40) a motion of a code signal output device and outputs a control signal according to the detected motion as a code signal;
setting (S15, S18, S28, S32, S38, S42) a function for controlling the broadcast receiving apparatus in response to the code signal; and
receiving (S15, S18, S28, S32, S38, S42) the code signal according to the motion of the outputted code signal output device, and controlling the operation of the broadcast receiving apparatus based on the function set in response to the reception.

13. A control method according to claim 12, **characterized in that**, after program information according to a date and a time has been externally acquired, when the code signal is received, the control process provides control so as to change the date and time of the program information.

14. A control method according to claim 13, **characterized in that**, when a code signal corresponding to a motion equal to or greater than a threshold value of a main body of the code signal output device has been received, a date of the program information is changed, and, when the code signal corresponding to a motion equal to or smaller than the threshold speed, a time of the program information is changed.

15. A control method according to claim 13, **characterized in that** the control process having received the code signal provides control so as to change at least one of the date and time of the program information of the program signal demodulator circuit, a channel of the broadcast signal, a volume of a voice signal of the broadcast signal, a broadcast type of the broadcast signal, a media type of the broadcast signal, and an input source outputted by the broadcast receiving apparatus.

16. A control method according to claim 12,
**characterized in that** the control process receives the code signal corresponding to at least one motion in the vertical direction and horizontal direction of the main body of the code signal output device.

17. A control method according to claim 12, **characterized in that** the control process receives the code signal corresponding to a motion equal to or greater than a threshold speed of the main body of the code signal output device and a motion equal to or smaller than the threshold speed thereof, respectively.

18. A control method according to claim 12, **characterized in that** the code signal output device is used, the device comprising:
a motion detecting portion (47) which detects its own motion and outputs a motion signal;
a code signal converting portion (45) which converts the motion signal outputted by the motion detecting portion into a code signal; and
a code signal output portion (49) which externally outputs the code signal converted by the code signal converting portion.

19. A control method according to claim 18, **characterized in that**, when the motion detecting portion detects the code signal output device itself and outputs a motion signal, this motion is displayed.

20. A control method according to claim 12, **characterized in that** the motion detecting portion outputs the motion signal after the motion direction and motion speed of the code signal output device itself has been detected by a gyro,sensor (47).
